# EUROPÄISCHE PATENTSCHRIFT

(11) **EP 3 198 991 B1**
(45) Veröffentlichungstag und Bekanntmachung des Hinweises auf die Patenterteilung: **19.06.2019**
(21) Anmeldenummer: 15756823.9
(22) Anmeldetag: 11.08.2015
(51) Int. Cl.: H05B 33/08

(54) **VERFAHREN UND SCHALTUNGSANORDNUNG ZUM SPEISEN EINER SERIENSCHALTUNG VON N LED-EINHEITEN**
METHOD AND CIRCUIT ARRANGEMENT FOR FEEDING A SERIES CIRCUIT OF N LED UNITS
PROCÉDÉ ET CIRCUIT D'ALIMENTATION D'UN MONTAGE EN SÉRIE DE N UNITÉS À DEL

(30) Priorität: 22.09.2014 AT 506712014
(43) Veröffentlichungstag der Anmeldung: 02.08.2017
(73) Patentinhaber: ZKW Group GmbH, 3250 Wieselburg (AT)
(72) Erfinder: BAKER, Julian, 3240 Mank (AT); BIESENBERGER, Martin, 3680 Persenbeug (AT); MIEDLER, Stefan, 3105 Unterradlberg (AT)
(74) Vertreter: Patentanwaltskanzlei Matschnig & Forsthuber OG
(86) Internationale Anmeldenummer: PCT/AT2015/050195
(87) Internationale Veröffentlichungsnummer: WO 2016/044869

(56) Entgegenhaltungen:
- DE-A1-102006 024 607
- DE-A1-102007 006 438
- US-A1- 2003 164 809
- US-A1- 2013 002 141

## Beschreibung

Die Erfindung bezieht sich auf ein Verfahren zum Speisen von n LED-Einheiten zumindest einer Leuchteinheit eines Kraftfahrzeuges mittels einer gesteuerten Stromquelle aus einer Spannungsquelle mit schwankender Betriebsspannung, bei welchem je nach Höhe der Betriebsspannung einzelne LED-Einheiten in Serie und/oder parallel geschaltet und/oder überbrückt werden.

Weiters bezieht sich die Erfindung auf eine Schaltungsanordnung zum Speisen von n LED-Einheiten mittels einer gesteuerten Stromquelle aus einer Spannungsquelle mit schwankender Betriebsspannung (U_{B}), und mit einer Steuereinheit zum Ansteuern der Stromquelle und einer den LED-Einheiten zugeordneten Schaltmatrix mit gesteuerten Schaltern, wobei die Steuereinheit dazu eingerichtet ist, je nach Höhe der Betriebsspannung einzelne LED-Einheiten in Serie und/oder parallel zu schalten und/oder zu überbrücken.

Unter LED-Einheit ist im Rahmen der Erfindung sowohl eine einzelne Leuchtdiode (LED) zu verstehen, als auch eine Einheit, die aus mehreren, parallel und/oder in Serie geschalteten LEDs besteht.

Aus der WO 2010/013177A1 geht beispielsweise eine Schaltmatrix hervor, welcher LED-Gruppen oder einzelne LEDs zugeordnet sind, und die an eine Spannungsquelle sowie an eine steuerbare Stromquelle angeschlossen ist. Es ist weiters eine Steuereinheit vorgesehen, welche die einzelnen Schalter der Schaltmatrix sowie die Stromquelle ansteuern kann, und die zum Vergleich der Spannung der Spannungsquelle mit in einem Speicher abgelegten Spannungsschwellen eingerichtet ist. Um eine zufriedenstellende Speisung der LEDs auch bei starken Schwankungen der Spannungsquelle sicherzustellen, ist die Steuereinheit dazu eingerichtet, je nach Höhe der an der Spannungsquelle festgestellten Spannung sämtliche oder einen Teil der LEDs in Serie oder Parallel zu schalten, wobei de facto alle denkbaren Kombinationen von Serien/Parallelschaltungen möglich sind. Die aufgezeigte Lösung erfordert einerseits je LED drei gesteuerte Schalter und eine entsprechend aufwändige Ansteuerlogik, vor allem aber besteht der Nachteil, dass im Falle einer Betriebsspannungsschwankung keine gleichmäßige Helligkeit der eingesetzten LEDs gewährleistet ist, vielmehr auch eine oder mehrere LEDs überhaupt dunkel bleiben.

Druckschrift US2013/0002141A1 offenbart ein Verfahren bzw. eine Schaltung gemäß der Präambel des Anspruchs 1 bzw. 8.

Es ist eine Aufgabe der Erfindung, ein Verfahren sowie eine Schaltungsanordnung zum Speisen einer Serienschaltung von n LED-Einheiten zum Einsatz in Kraftfahrzeugen zu schaffen, bei welcher trotz Schwankungen der Betriebsspannung, die an sich zum Ausfall der entsprechenden Leuchtmodule führen würde, einen Fahrbetrieb ermöglicht, welcher noch die erforderliche Verkehrssicherheit gewährleistet bzw. das Erscheinungsbild der gesamten LED-Anordnung möglichst wenig beeinträchtigt, auch wenn starke Spannungsschwankungen auftreten.

Diese Aufgabe wird mit einem Verfahren der eingangs genannten Art gelöst, bei welchem erfindungsgemäß das Verschalten der LED-Einheiten bei einem Absinken der Betriebsspannung unter Berücksichtigung einer abgespeicherten Gewichtung hinsichtlich der einzelnen LED-Einheiten zugeordneten Priorität erfolgt.

Durch die in einem Speicher vorgegebene Priorisierung fallen bei einem starken Spannungsabfall nicht alle oder beliebige LED-Einheiten aus. Vielmehr werden jene LED-Einheiten, welche für die Sicherheit vorrangig sind, aktiv gehalten, wogegen andere, weniger wichtige, stillgelegt werden.

Bei einer einfach zu gestaltenden Variante ist vorgesehen, dass eine Serienschaltung von n LED-Einheiten gespeist wird, wobei je nach Höhe der Betriebsspannung einzelne LED-Einheiten kurzgeschlossen werden, und bei einem Absinken der Betriebsspannung (U_{B}) unter Berücksichtigung einer abgespeicherten Gewichtung hinsichtlich der Priorität je k LED-Einheiten der Serienschaltung kurzgeschlossen werden, wobei gleichzeitig (n-k) LED-Einheiten stromdurchflossen bleiben.

Dabei ist es zweckmäßig, wenn bei nominaler Betriebsspannung und normalen Betriebszustand k = 0 gewählt und die Serienschaltung mit konstantem Strom gespeist wird.

Bei einer empfehlenswerten Variante ist vorgesehen, dass im Falle des Kurzschließens von LED-Einheiten die Stromquelle zur Änderung auf einen höheren/niedrigeren Wert des konstanten Stroms angesteuert wird. Auf diese Weise kann durch eine vorübergehende Stromerhöhung ein weitgehend ungestörter Betrieb aufrechterhalten werden.

Eine weitere empfehlenswerte Möglichkeit zur Verminderung der Probleme bei einem Spannungsabfall ergibt sich, wenn bei einem Absinken der Betriebsspannung der Strom durch die Serienschaltung erhöht und/oder zumindest eine der restlichen, nicht ständig kurzgeschlossenen LED-Einheiten zyklisch durchlaufend ständig wechselnd kurzgeschlossen wird.

Erwärmungsprobleme werden sinnvoll berücksichtigt, falls die Stromerhöhung in Abhängigkeit von einer für die LED-Einheiten signifikanten Temperatur erfolgt.

Bei einer praxisgerechten Variante wird dabei die Dauer (τ) eines Taktes zwischen 1 µs und 50 ms und vorzugsweise mit 5 ms gewählt.

Im Sinne der Verkehrssicherheit ist es besonders zweckmäßig, wenn jener Bereich, der sich am nächsten dem HV-Punkt befindet, am höchsten priorisiert/gewichtet wird.

Eine weitere Erhöhung der Verkehrssicherheit lässt sich erreichen, wenn die Gewichtung auf Basis zugeführter, die aktuelle Fahrsituation betreffender Signale, beispielsweise GPS-Signale, Lenkradsignale oder anderer Signale eines Bordrechners erfolgt.

Ebenso wird die Aufgabe mit einer Schaltungsanordnung der oben angegebenen Art gelöst, bei welcher nach der Erfindung der Steuereinheit eine Speichereinheit zum Abspeichern von Informationen über Gewichtungen zur Priorität bestimmter LED-Einheiten zugeordnet ist und die Steuereinheit zum Vergleich der Betriebsspannung und/oder des Stromes der Stromquelle mit vorgebbaren Schwellenwerten eingerichtet ist und dazu, in Abhängigkeit von diesem Vergleich und der Gewichtung die Schaltmatrix so anzusteuern, dass das Verschalten der LED-Einheiten bei einem Absinken der Betriebsspannung unter Berücksichtigung einer abgespeicherten Gewichtung hinsichtlich der einzelnen LED-Einheiten zugeordneten Priorität erfolgt.

Bei einer einfach realisierbaren Variante ist vorgesehen, dass die Schalteranordnung aus n, je die in Serie geschalteten LED-Einheiten überbrückenden gesteuerten Schaltern besteht, und die Steuereinheit dazu eingerichtet ist, in Abhängigkeit von dem Vergleich und der Gewichtung je k LED-Einheiten der Serienschaltung über die zugeordneten Schalter kurzzuschließen, wobei gleichzeitig (n-k) LED-Einheiten stromdurchflossen bleiben.

Mit Vorteil ist dabei die Steuereinheit dazu eingerichtet, eine Gewichtung auf Basis zugeführter, die aktuelle Fahrsituation betreffender Signale, beispielsweise GPS-Signale, Lenkradsignale oder anderer Signale eines Bordrechners, durchzuführen.

Zweckmäßig ist es weiters, wenn die Steuereinheit dazu eingerichtet ist, in Abhängigkeit von dem Vergleich getaktet und zyklisch durchlaufend ständig wechselnd je k LED-Einheiten der Serienschaltung über die zugeordneten Schalter kurzzuschließen, wobei gleichzeitig (n-k) LED-Einheiten stromdurchflossen bleiben.

Eine praxisgerechte Variante zeichnet sich dadurch aus, dass die Dauer eines Taktes zwischen 1 µs und 50 ms liegt und vorzugsweise 5 ms beträgt.

Weiters ist es vorteilhaft, wenn die Speichereinheit zum Abspeichern auch von Informationen über Maximalströme und jeweilige Istwerte von Spannungen und Strömen und Gewichtungen bestimmter LED-Einheiten zugeordnet ist.

Eine ergänzende Kompensation der Probleme bei einem Spannungsabfall kann erreicht werden, wenn die Steuereinheit dazu eingerichtet ist, bei einem Absinken der Betriebsspannung den Strom durch die Serienschaltung zu erhöhen und/oder zumindest eine der LED-Einheiten zyklisch durchlaufend ständig wechselnd kurzzuschließen.

Die Erfindung samt weiteren Vorteilen ist im Folgenden an Hand beispielsweiser Ausführungsformen näher erläutert, die in der Zeichnung veranschaulicht sind. In dieser zeigen
Fig. 1 ein Blockschaltbild einer erfindungsgemäßen Schaltungsanordnung,
Fig. 2 den Teil eines Blockschaltbildes wie Fig. 1, jedoch für eine Variante bezüglich der Ansteuerung der LEDs,
Fig. 3 eine beispielsweise Lichtverteilung einer LED-Scheinwerfereinheit,
Fig. 4 ein Diagramm betreffend den zeitlichen Ablauf der Ansteuerung von vier LEDs nach einer ersten Variante eines Verfahren gemäß der Erfindung,
Fig. 5 ein Diagramm betreffend den zeitlichen Ablauf der Ansteuerung von fünf LEDs nach einer zweiten Variante des Verfahren gemäß der Erfindung,
Fig. 6 ein Ablaufdiagramm zu einer Ausführung eines Verfahrens gemäß der Erfindung und
Fig. 7 in vier Diagrammen den zeitlichen Ablauf der Ansteuerung von vier LEDs bei gleichzeitiger Ausregelung von Helligkeitsschwankungen über den Strom.

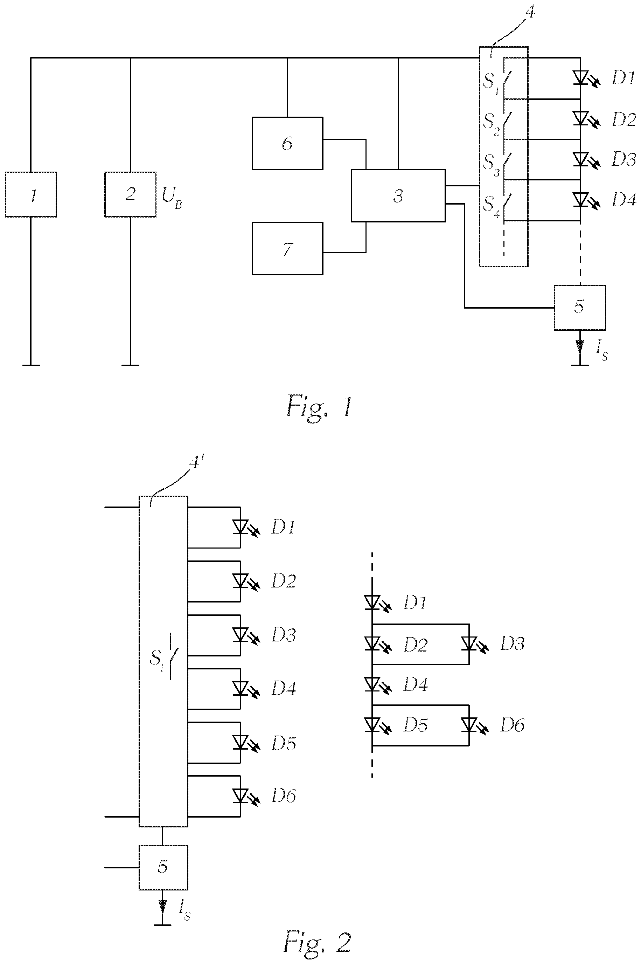

Fig. 1 zeigt ein Blockschaltbild einer ersten Ausführungsform einer Schaltungsanordnung nach der Erfindung am Beispiel der Ansteuerung von vier Leuchtdioden, im Folgenden LEDs genannt. Bei diesem Beispiel wird in einem Kraftfahrzeug mit Hilfe eines nicht näher dargestellten Energiemanagementsystems 1, das vor allem einen Generator und einen Laderegler enthält, eine Fahrzeugbatterie 2 nach Möglichkeit in einem geladenen Zustand mit einer Sollspannung von z.B. 12 Volt gehalten. Die tatsächliche Batteriespannung ist mit U_{B} bezeichnet, sie beträgt während des Fahrbetriebes meist 13,5 bis 15 Volt.

Mit dieser Spannung U_{B} sollen nun vier in Serie geschaltete LED-Einheiten LED1, LED2, LED3 und LED4 gespeist werden, die im einfachsten Fall aus einzelnen LEDs bestehen und zur Vereinfachung auch so gezeichnet sind, doch soll es klar sein, dass die LED-Einheiten auch je mehrere, insbesondere auf einem Chip zusammengefasste LEDs umfassen kann. Den LED-Einheiten LED1, LED2, LED3 und LED4 ist eine von einer Steuereinheit 3 angesteuerte Schalteinheit 4 zugeordnet, wobei zu Versorgung der Serienschaltung mit konstantem Strom eine gesteuerte Stromquelle 5 vorgesehen ist. Die Schalteinheit 4 bietet zumindest die Möglichkeit, jede der vier LED-Einheiten durch Schalter S₁....S₄ wahlweise und für eine bestimmte Zeitdauer kurzzuschließen. Die Schalter S₁....S₄ sind im Allgemeinen durch Schalttransistoren realisiert. Der Steuereinheit ist eine von einer Referenzspannungseinheit 6 gelieferte Referenzspannung U_{ref} zugeführt und die Steuereinheit 3 steht weiters mit einer Speichereinheit 7 in Verbindung, in welcher Informationen über Maximalströme, jeweilige Istwerte von Spannungen und Strömen, Gewichtungen bestimmter LED-Einheiten hinsichtlich deren Prioritäten, Ansteuerzeiten, Maximaltemperaturen, zuletzt angesteuerte Schalter etc. abgelegt werden können.

Bei der in Fig. 2 dargestellten Variante ist vorgesehen, dass eine Anzahl von Leuchtdioden bzw. LED-Einheiten D1 bis D6, im vorliegenden Beispiel sechs, je mit ihren beiden Anschlüssen zu einer Schaltmatrix 4' geführt sind, welche eine solche Anzahl von gesteuerten Schaltern Sᵢ besitzt, dass die LEDs D1 bis D6 im Prinzip in beliebiger Weise parallel oder in Serie geschaltet werden können. Dies entspricht soweit dem Stand der Technik, z.B. nach der eingangs genannten WO 2010/013177A1. Rechts in Fig. 2 ist beispielsweise die für einen bestimmten Betriebsfall verschaltete Serienschaltung D1 - D2//D3 - D4 -D5//D6 gezeigt. Wie weiter unten genauer erläutert wird, dient hier die Schaltmatrix 4' zur Realisierung einer Notbeleuchtungsfunktion.

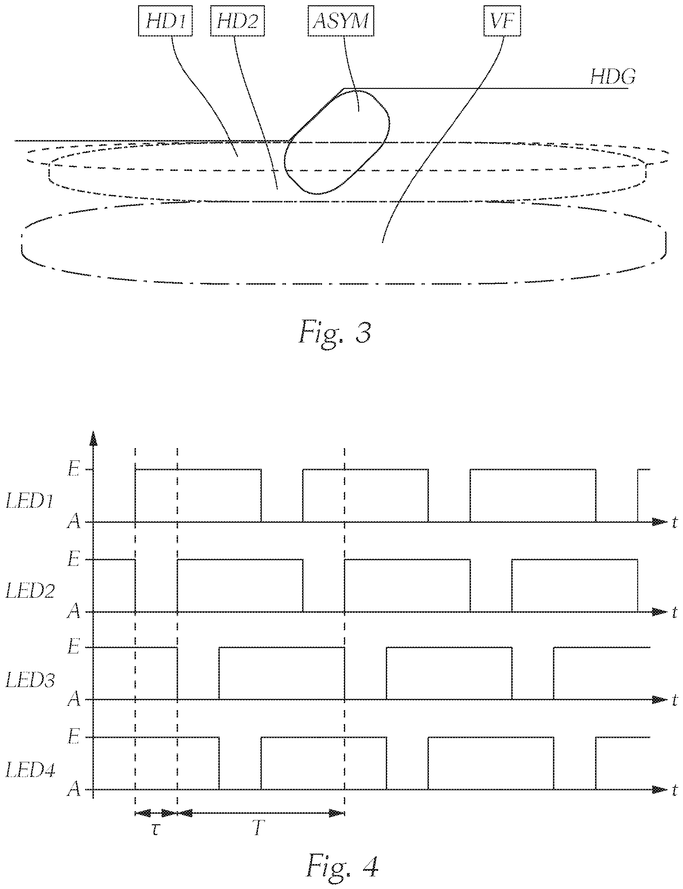

Fig. 3 zeigt schematisch die Lichtverteilung eines Abblendlichtes, wobei dieses Abblendlicht von mehreren LED-Einheiten gebildet wird. Im vorliegenden Fall gibt es vier LED-Einheiten HD1, HD2, ASYM und VF, wobei von einer das Vorfeld VF gebildet wird, von zwei weiteren die horizontale Helldunkel-Grenze HD1 und HD2 gebildet wird und von der vierten LED-Einheit die Asymmetrie ASYM des Abblendlichtes. Im vorliegenden Fall werden somit die Bezeichnungen HD1, HD2, ASYM und VF sowohl für LED-Einheiten als auch für das von diesen je ausgeleuchtete Feld verwendet. Dies entspricht einem typischen, in der Praxis verwendeten LED-Abblendlichtmodul, welches als Projektionssystem mit Mehrkammerreflektor ausgebildet ist, wobei den Kammern je eine LED-Einheit zugeordnet ist und insgesamt ein Abblendlicht gebildet wird.

Dies bedeutet, dass die Anzahl der Teillichtverteilungen von der Bauart des Moduls abhängt, wobei, wie bereits erwähnt wurde, eine LED-Einheit auch aus mehreren LEDs bestehen kann, die je nach Belieben zusammen verschaltet als LED-Einheit im Sinne der Erfindung fungieren können, um so wiederum eine definierte Anzahl an Teillichtverteilungen schaffen zu können. Dabei ist zu beachten, dass das Zusammenschalten von LEDs in bestimmten Ausführungen zu einer anderen Flussspannung bzw. Gesamtspannung der LED-Einheit führt. Die Anzahl der individuell schaltbaren Teillichtverteilungen ist somit einerseits modulabhängig und andererseits verschaltungsabhängig, sie kann jedoch in einem bestimmten Bereich variiert werden.

Jedenfalls wird bei heutigen LED-Modulen das Lichtbild immer aus mehreren LED-Einheiten gebildet, die je eine Teillichtverteilung bilden, sodass einem LED-Scheinwerfer das erzeugte Lichtbild immer aus mehreren Teillichtverteilungen besteht, wovon bestimmte Teillichtverteilungen für die Sichtbarkeit gegenüber anderen Verkehrsteilnehmern wichtiger sind als andere. Dementsprechend kann eine gewisse Gewichtung/Priorisierung für die einzelnen Teillichtverteilungen vergeben werden, die im Falle einer bestimmten Unterspannung dafür sorgt, dass zumindest die Sichtbarkeit gegenüber anderen Verkehrsteilnehmern gesichert ist.

Allgemein kann man sagen, dass jener Bereich (jene Teillichtverteilung), der sich am nächsten dem HV-Punkt (der 25 cm oberhalb der Hell-Dunkel-Grenze in der Mitte des Lichtstrahls liegt, ein wichtiger Begriff der KFZ-Lichttechnik, im Lichtbild jener Punkt, an dem sich die Horizontale und Vertikale schneiden, also der 0° / 0° Punkt) befindet, in bevorzugter Weise sogar einige Grade über der horizontalen O°-Linie, am höchsten priorisiert/gewichtet werden muss, da dieser Bereich dem Bereich entspricht, in dem sich andere Verkehrsteilnehmer am ehesten befinden bzw. in diesem Bereich die größte Gefahr besteht, andere Verkehrsteilnehmer anzutreffen. Je nach Situation kann es auch von Vorteil sein, genau jene Bereiche höher zu priorisieren, welche aus Sicht des Fahrers wichtig erscheinen, die somit nicht für die Sichtbarkeit gegenüber anderen Verkehrsteilnehmer dienen sondern mehr für die Ausleuchtung bestimmter Bereiche für den Fahrer selbst als wichtig erscheinen. Beispielsweise kann auch eine Gewichtung hinsichtlich des Komforts stattfinden, nämlich derart, dass jene Bereiche niedriger gewichtet werden, bei denen der Fahrer nicht sofort bemerkt, dass diese dunkler erscheinen.

Alternativ kann diese Funktion mit GPS, Lenkradsensor, Neigungssensor usw. zusammenarbeiten, um den Bereich der Priorisierung je nach Straßenlage zu adaptieren; beispielsweise um in einer Kurvenfahrt jene LED-Einheit zu priorisieren, welche dazu eingerichtet ist, in Richtung der Kurve zu leuchten oder zumindest in die Breite zu leuchten, da in einer solchen Situation die Priorisierung der Teillichtverteilung in der Nähe des HV-Punktes nicht die beste Wahl wäre. Mit anderen Worten erfolgt hier die Gewichtung unter Berücksichtigung der aktuellen Fahrsituation.

Im normalen Betriebszustand, bei einer nominalen Betriebsspannung U_{B}, z.B. 12 Volt, werden alle vier LEDs in Serie geschaltet (vgl. Fig. 1) von dieser Spannung gespeist.

In der Steuereinheit 3 wird die augenblickliche Betriebsspannung U_{B} ständig mit der Referenzspannung U_{ref} verglichen und an Hand der im Speicher abgespeicherten Werte wird eine Entscheidung getroffen, ob ein Eingreifen wegen einer Unterspannung erfolgen soll. Bei einem solchen Eingreifen können LED-Einheiten entsprechend dem erfindungsgemäßen Verfahren periodisch kurzgeschlossen werden bzw. es kann eine Änderung des Stroms Is durch die Serienschaltung durch Abgabe eines entsprechendes Signals der Steuereinheit 3 an die gesteuerte Stromquelle 5 in die Wege geleitet werden.

Unter Bezugnahme auf Fig. 4 in Verbindung mit Fig. 1 soll nun das erfindungsgemäße Verfahren, das mittels einer Schaltungsanordnung nach der Erfindung verwirklicht werden kann, erläutert werden. In dem gezeigten Diagramm sind nun übereinander die zeitabhängigen Schaltzustände von vier LEDs LED1, LED2, LED3, LED4 dargestellt, und zwar für den Betriebsfall, dass die Betriebsspannung U_{B} auf einen solchen Wert abgesunken ist, dass vorübergehend immer eine der vier LEDs ausgeschaltet, nämlich durch einen der Schalter S₁, ...., S₄ (Fig. 1) kurzgeschlossen wird. Die Buchstaben E bzw. A auf der Ordinatenachse bedeuten dabei für die jeweiligen LEDs "Ein" bzw. "Aus".

Man erkennt in Fig.4, dass zyklisch durchlaufend jeweils eine der vier LEDs der Serienschaltung kurzgeschlossen wird, wobei gleichzeitig drei LEDs stromdurchflossen bleiben. Das Kurzschließen erfolgt für eine solche Dauer oder Taktlänge τ, dass für das menschliche Auge kein unangenehmes Flackern erkennbar ist. In der Praxis kann beispielsweise eine Taktdauer τ = 20 ms gewählt werden, doch können im Allgemeinen Taktlängen von 1 µs bis 50 ms sinnvoll sein. Weiters erkennt man in Fig. 4, dass der gesamte Schaltvorgang zyklisch mit einer Periodendauer T = 4τ abläuft.

Die Darstellung nach Fig. 4 macht auch klar, dass zu jedem Zeitpunkt drei der vier LEDs eingeschaltet sind und eine LED ausgeschaltet (kurzgeschlossen) ist. Die geringere Betriebsspannung erlaubt nur das Betreiben von drei LEDs an Stelle von vier LEDs (im normalen Betriebsfall), wobei nicht, wie nach dem Stand der Technik, eine der LEDs ständig dunkel bleibt.

Bereits an dieser Stelle soll erwähnt werden, dass bei entsprechender Schaltungsdimensionierung der durch den - periodischen - Ausfall einer LED bedingte Helligkeitsabfall durch eine Erhöhung des Stroms durch die Serienschaltung zumindest teilweise kompensiert werden kann.

Weiters möge erwähnt werden, dass man oft darnach trachten wird, die Ein- und Ausschaltflanken nicht zu steil zu machen, sondern über die technisch mögliche Flankensteilheit hinaus flacher zu gestalten, um Flackereffekte und/oder EMVtechnische Nachteile zu vermeiden.

In Zusammenhang mit Fig. 4 wurde ein einfacher Spezialfall behandelt, der zunächst das Verständnis der Erfindung erleichtern soll. Der allgemeine Fall ist jedoch jener, dass die Serienschaltung n LED-Einheiten aufweist, von welchen in Abhängigkeit von der Höhe der Betriebsspannung jeweils k LED-Einheiten kurzgeschlossen werden, wobei gleichzeitig (n-k) LED-Einheiten stromdurchflossen bleiben. Im Falle der Fig. 4 war somit n = 4 und k= 1.

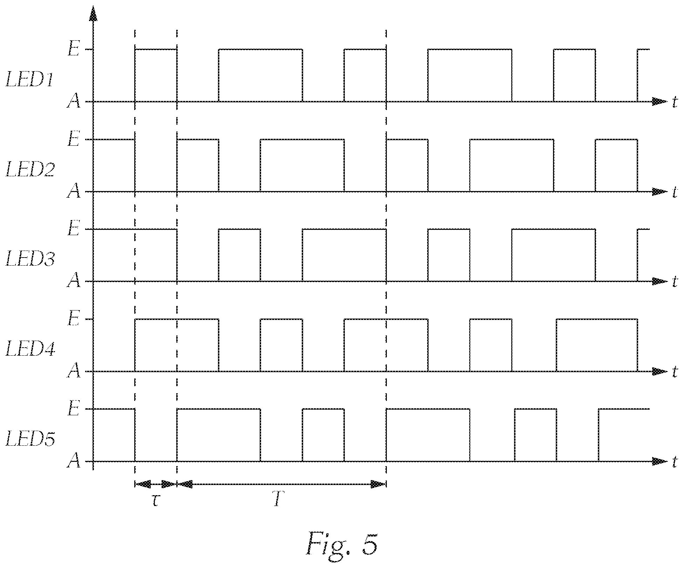

Ausgehend von dieser Überlegung sei nun Fig. 5 betrachtet, welche sich auf eine Serienschaltung von fünf LED-Einheiten LED1, LED2, LED3, LED4 und LED5 bezieht und von der Annahme ausgegangen wird, dass die Speisespannung U_{B} soweit abgesunken ist, dass immer zwei der fünf LEDs kurzgeschlossen werden, um einen ordnungsgemäßen Betrieb der entsprechenden Beleuchtungseinrichtung sicherzustellen. Auch hier ist die Taktlänge τ eingezeichnet, jedoch beträgt die Periodendauer entsprechend der Anzahl fünf der LED-Einheiten T = 5τ. Analog zu dem an Hand der Fig. 4 erläuterten Fall sind zu jedem Zeitpunkt drei der fünf LEDs eingeschaltet und zwei LEDs ausgeschaltet (kurzgeschlossen). Die geringere Betriebsspannung reicht hier nur für drei an Stelle von fünf LEDs (im normalen Betriebsfall) aus, wobei nicht, wie nach dem Stand der Technik, eine oder sogar mehrere der LEDs ständig dunkel bleiben. Natürlich kann im Falle der Serienschaltung von fünf LED-Einheiten bei nur wenig abgefallener Betriebsspannung U_{B} auch nur eine LED periodisch abgeschaltet werden.

An dieser Stelle soll angemerkt werden, dass die Anzahl der verwendeten LEDs bzw. LED-Einheiten auch in einem Zusammenhang mit deren Flussspannung und der zur Verfügung stehenden Betriebsspannung, bei Kraftfahrzeugen die Bordspannung, die auch 24 Volt oder mehr betragen kann.

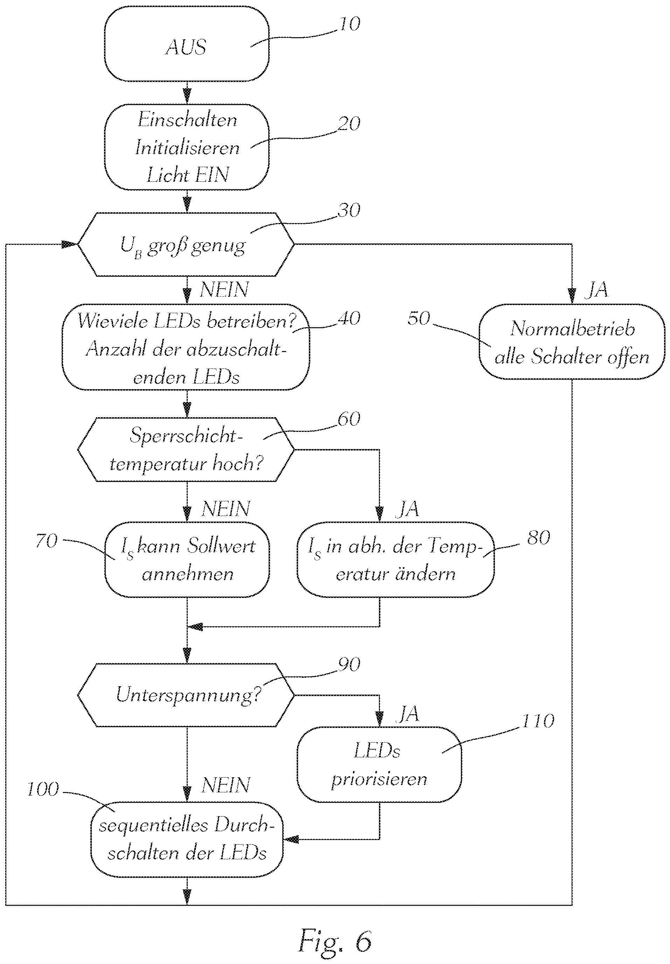

Fig. 6 zeigt ein das erfindungsgemäße Verfahren betreffendes beispielsweises Ablaufdiagramm, das, soweit es nicht selbsterklärend ist, hier ergänzend erläutert sei:
Beginnend von dem ausgeschalteten Zustand in Schritt 10, erfolgt im Schritt 20 das Einschalten mit dem Initialisieren der Steuereinheit 3 in Verbindung mit dem Speicher 7. In Schritt 30 wird mittels der Referenzspannung oder einem Soll-IstVergleich des Stroms durch die Serienschaltung überprüft, ob die Betriebsspannung U_{B} groß genug ist. Falls dies nicht der Fall ist, erfolgt der Schritt 40 zum Überprüfen, wie viele LED-Einheiten abgeschaltet werden müssen. Die entsprechende Anzahl k ergibt sich zu k = n - (U_{B}/U_{LED}, abgerundet).

Analog zu dieser Anzahl ergibt sich eine bestimmte Einschaltdauer jeder LED-Einheit in der entsprechenden Periode. Vergleichbar mit einer Pulsweitenmodulation ergibt sich also ein Tastgrad für jede LED-Einheit von (n-k)/n. Im Beispiel von vier LEDs: bei k=1 ergeben sich 75% vgl. Fig. 3, bei k=2 ergeben sich 50%, usw.

Falls in Schritt 30 festgestellt wurde, dass U_{B} groß genug ist bzw. der Iststrom dem Sollwert des Stroms entspricht (siehe Erläuterung im nächsten Absatz), liegt gemäß Schritt 50 der Normalbetrieb vor, alle Schalter, z.B. S₁ bis S₄ in Fig. 1, sind geöffnet und der Betrieb der LED-Einheiten erfolgt kontinuierlich, d.h. nicht gepulst. Mit Vorteil kann auch ein Ablauf vorgesehen sein, bei dem die Anzahl der zu betreibenden LEDs schrittweise erhöht wird.

Die Steuerung über Schwellwerte der Spannung ist möglich, kann aber in der Praxis Nachteile zeigen, da die Flussspannung von LEDs stark schwankt (produktionsbedingt) und abhängig von Strom und Temperatur ist. Eine zweckmäßige Regelung sieht vor, die LEDs zu überbrücken wenn der Strom sinkt. Die Stromquelle versucht den Strom konstant zu halten, schafft sie dies nicht, z.B. wegen Unterspannung, sinkt der Strom. Durch eine Strommessung, beispielsweise über einen Messwiderstand kann eine Abweichung des Istwertes von einem Sollwert (welcher im Speicher abgelegt ist) durchgeführt werden. Bei einer definierten Abweichung z.B. um -5% (auf 95%) soll zunächst eine LED kurzgeschlossen werden. Kann der Sollstrom erreicht werden, wird alternierend eine LED kurzgeschlossen. Ist dies nicht der Fall muss eine weitere LED kurzgeschlossen werden, usw.

Um über die Strommessung dann wieder in den Normalbetrieb wechseln zu können bzw. mit der Methode der Strommessung zu kontrollieren, ob es die Betriebsspannung überhaupt erlaubt, wieder in den Normalbetrieb wechseln zu können, kann man alle LEDs kurzzeitig betreiben (beispielsweise in einem 10µs Bereich, damit dieses Umschalten für das Auge nicht wahrnehmbar ist). In dieser Zeit wird der Strom gemessen. Entspricht der gemessene Strom dem Sollstrom, nämlich jenem Strom der im Normalbetrieb fließen sollte, und dessen Wert im Speicher 7 abgelegt ist, kann in den Normalbetrieb (alles Schalter offen) übergegangen werden.

In Schritt 60, 70, 80 (optional) wird überprüft, inwieweit der Strom erhöht werden kann. LEDs können je nach Typ mit bis zu doppeltem oder gar dreifach höherem Strom betrieben werden, dies jedoch nur für eine kurze Zeitdauer (10 - 100 ms), da sich sonst deren Temperatur drastisch erhöhen würde. Die Pulsdauer ist von der Stromhöhe und der Temperatur abhängig und wird von den LED-Herstellern spezifiziert. Um jedoch Helligkeitsschwankungen aufgrund der verringerten Anzahl an leuchtenden LED-Einheiten auszugleichen, kann temperaturabhängig der Strom bis zu einem gewissen Wert erhöht werden.

Mit anderen Worten darf je nach Typ und Verwendung der LED-Einheit eine maximale Sperrschichttemperatur nicht überschritten werden (über Messung der Kontakttemperatur und der Umgebungstemperatur und/oder der Leistungsaufnahme kann über Herstellerangaben des thermischen Widerstands zwischen Sperrschicht und Kontaktstelle die Sperrschichttemperatur der LED oder der mehreren LEDs der LED-Einheit errechnet werden). Allgemein wird man hier eine Temperatur messen, die für die (Sperrschicht)Temperatur der LEDs signifikant ist, gegebenenfalls kann auch die Umgebungstemperatur erfasst werden.

Liegt die Sperrschichttemperatur unter einem bestimmten Wert, kann Is entsprechend erhöht werden, um einer Verringerung der Gesamthelligkeit des LED-Einheiten-Strangs aufgrund eines getakteten nacheinander folgenden Kurzschließens, zu verhindern. Dementsprechend wird Is auf das n/ (n-k) fache eingestellt. Muss beispielsweise aufgrund einer Betriebsspannungsverringerung auf 10 Volt eine LED-Einheit ausgeschaltet werden, so ergibt sich: 4/(4-1) = 1,333 und Is kann auf 133% erhöht werden. Wobei anzumerken ist, dass eine LED bei zunehmenden Strom an Wirkungsgrad verliert, sich mit anderen Worten nicht linear verhält. Folglich müsste man den Strom entsprechend den Herstellerangaben auf einen höheren Wert setzen, um eine entsprechende Lichtsteigerung zu erreichen. Beispielsweise müsste bei einer gewünschten Lichtsteigerung von 33% der Strom um ca. 40% erhöht werden.

Vorzugsweise kann die Änderung des Stromes zeitkontinuierlich erfolgen, damit ergeben sich Vorteile sowohl bei der technischen Dimensionierung der Stromquelle 5 als auch im EMV-Verhalten.

Liegt die Sperrschichttemperatur über einem bestimmten Wert, kann Is zwar erhöht werden, jedoch nur auf einen bestimmten Maximalwert, bei dem sichergestellt ist, dass eine Erhöhung diesen Maximalwert zu keinem Schaden der LED-Einheiten führt. Natürlich können mehrere Schwellwerte verwendet werden, um ein möglichst kontinuierliches Kompensieren von Helligkeitsschwankungen zu erreichen.

In Schritt 90 (optional) wird überprüft, inwieweit eine drastische Unterspannung vorliegt, wobei der entsprechende Vergleichswert je nach System frei wählbar ist. Beispielsweise könnte man eine Unterspannung als Spannung unter 7 Volt definieren. Dementsprechend würde bei einem Absinken der Betriebsspannung auf beispielsweise 6 Volt Schritt 110 folgen. Demnach würde eine bestimmte, im Speicher 7 festgelegte Priorisierung stattfinden. So wie vorhergehend erklärt, kann damit eine Art Notlichtfunktion realisiert werden.

Hingegen erfolgt bei einer Betriebsspannung im vorliegenden Beispiel von über 7 Volt das beschriebene zyklische Durchschalten der LED-Einheiten.

Je nach Auslegung des Schwellwertes für eine Unterspannung ist es natürlich auch möglich, im Beispiel von vier LED-Einheiten nur drei LED-Einheiten, nämlich jene drei mit der höchsten Gewichtungen/Priorisierungen getaktet durchzuschalten. Dies ermöglicht einen äußerst variablen Einsatzbereich.

In Schritt 90 erfolgt das nacheinander erfolgende Durchschalten der LED-Einheiten, wobei unter Zugriff auf den Speicher eine Merkfunktion verwendet wird, um ein ständiges Abschalten derselben LED-Einheit zu vermeiden. Zur zusätzlichen Erläuterung sei auf die Diagramme der Fig. 4 und 5 verwiesen.

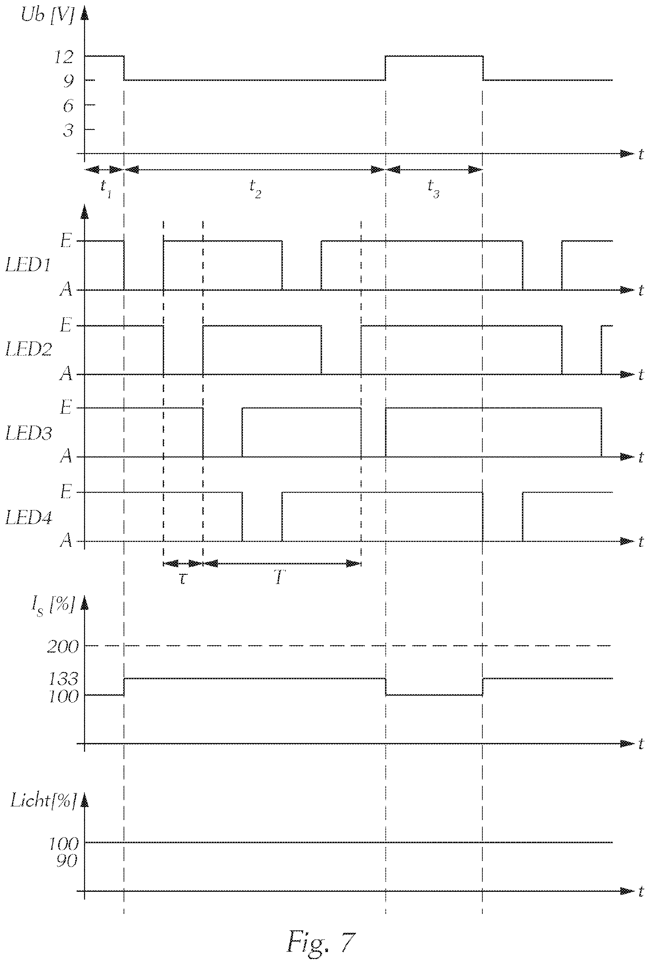

Die Merkfunktion dient unter anderem auch dazu, ein systembedingtes Zurücksetzen des aufeinanderfolgenden Kurzschließens der einzelnen LED-Einheiten nach einem "Normalbetrieb" zu verhindern, so wie es in Fig. 7 gezeigt wird. Alternativ könnte anstatt einer Merkfunktion ein Zufallsgenerator verwendet werden, um bei beispielsweise immer wiederkehrenden entsprechend gleichlange andauernden kurzen Schwankungen eine inhomogene Ausnützung oder Alterung der LED-Einheiten zu verhindern. Mit kurzen Schwankungen ist ein Spannungseinbruch gemeint, welcher dazu führt beispielsweise immer nur bis zu drei von beispielsweise vier LED-Einheiten abwechselnd kurzzuschließen. Wie bereits angemerkt, können die einzelnen LED-Einheiten in der Steuereinheit 3 bzw. der dieser allenfalls zugeordneten Speichereinheit 7 priorisiert sein. Dadurch kann man festlegen, dass ab einem bestimmten Abfall der Speisespannung U_{B} nur noch eine beschränkte, jedoch definierte Anzahl von LED-Einheiten betrieben werden soll. So kann beispielsweise ein Scheinwerfermodul mehrere Gruppen von LED-Einheiten enthalten, wobei jede Gruppe für einen Ausleuchtbereich zuständig ist. Unter Bezugnahme auf Fig. 3 kann beispielsweise bei vier Gruppen eine Zuordnung zu den Ausleuchtbereichen HD1, HD2, ASYM und VF vorgenommen werden. Um im Falle einer Unterspannung zumindest noch für ausreichende Sichtbarkeit gegenüber anderen Fahrzeugen sorgen zu können, ist mit Vorteil beispielsweise jene Gruppe, welche für die Ausleuchtung ASYM zuständig ist, am höchsten priorisiert, d.h. am stärksten gewichtet.

Eine beispielsweise Gewichtung könnte sein: ASYM - HD1 - HD2 - VF. Wird durch die Steuereinheit eine Unterspannung oder ein Absinken des Stromes festgestellt, kann dann zunächst das Vorfeld VF zurückgedimmt werden. Dazu ist weiters anzumerken, dass, geht man beispielsweise von einer nominalen Betriebsspannung U_{B} = 12 Volt aus, auch bei Absinken der Betriebsspannung auf U_{B} = 4 Volt eine LED durch Verwendung des zyklisch durchlaufenden Taktens bzw. Kurzschließens anderer LEDs und/oder durch höhere Gewichtung normal betrieben werden kann.

Im allgemeinen Fall kann nicht nur durch ein zyklisches Schalten sondern auch durch Ansteuerung der gesteuerten Stromquelle auf die Stromverteilung der einzelnen LED-Einheiten bzw. LEDs eingewirkt werden, was im Folgenden unter Bezugnahme auf Fig. 7 erläutert werden soll.

Ausgangspunkt ist eine nominale Betriebsspannung U_{B} = 12 Volt von vier LEDs oder LED-Einheiten, die gemäß dem ersten Diagramm oben in Fig. 6 nach einer Zeitspanne t₁ auf 9 Volt absinkt, nach einer Zeitspanne t₂ wieder den Nominalwert von 12 Volt erreicht und nach einer weiteren Zeitspanne t₃ wieder auf 9 Volt absinkt. Natürlich ist der dargestellte zeitliche Verlauf vereinfacht bzw. idealisiert und er soll lediglich zur Erläuterung der Erfindung dienen.

Das von oben zweite Diagramm der Fig. 7 entspricht sinngemäß jenem nach Fig. 4 und zeigt den Beginn des zyklischen Durchschaltens bzw. Kurzschließens einer LED nach Ablauf der Zeit t₁. Nach Ablauf der Zeit t₂ wird vorübergehend wieder auf den "Normalbetrieb" übergegangen, in dem alle LEDs bestromt sind und nach Ablauf der Zeit t₃ beginnt wieder das zyklische Kurzschließen einer LED.

In dem dritten Diagramm von oben der Fig. 7 ist nun der Eingriff auf die gesteuerte Stromquelle zwecks Änderung des Stroms Is gezeigt. Während der Zeit t₁ bleibt der Strom Is auf seinem Nominalwert, hier mit "100 %" bezeichnet. Um den gesamten Lichtstrom der LED-Anordnung trotz des zyklischen Ausschaltens einer LED zu erhalten oder zumindest teilweise zu kompensieren, kann nun der Strom Is vorübergehend, nämlich während der Zeitspanne t₂ erhöht werden, im vorliegenden Fall auf ca. 140% des nominalen Stroms. Nach Ablauf der Zeit t₂, d.h. der Rückkehr der Betriebsspannung U_{B} auf ihren Nominalwert, wird der Strom Is wieder auf seinen Nominalwert von 100% gestellt, um nach Ablauf der Zeit t₃ wieder auf 133% erhöht zu werden. Das Ergebnis ist in dem untersten Diagramm der Fig.6 zu sehen, welches den Lichtstrom darstellt, welcher sich trotz des zeitweisen zyklischen Abschaltens nicht ändert.

Für die Funktion der Notbeleuchtung ist zwar eine Gewichtung wesentlich, aber ein zyklisches Durchschalten (Kurzschließen) der einzelnen LED-Einheiten ist nicht zwingend erforderlich. Das Problem, wie auch aus dem Stand der Technik bekannt, liegt darin, dass eine ordnungsgemäße Beleuchtung direkt von der Betriebsspannung, bei Kraftfahrzeugen der Batteriespannung, abhängt. Wenn die Betriebsspannung Ub, beispielsweise aufgrund einer defekten Autobatterie, unter einen bestimmten Wert (definierbar) abfällt, bei dem nur noch eine oder, allgemein gesagt, weniger als die Gesamtanzahl der LED-Einheiten zu betreiben sind, liegt dieses Problem vor. Beispielsweise wäre das schon bei 10 Volt der Fall, falls die Flussspannung der LED-Einheiten (natürlich abhängig von der Verschaltung, sollte eine LED-Einheit aus mehreren LEDs bestehen) bei z.B. etwa 3Volt liegt. In diesem Fall würden nämlich etwa 12 Volt für den "Normalbetrieb" benötigt werden.

Gewisse Spannungswerte, die dazu führen, dass sie sich genau im Schwellbereich zwischen Ausschalten einer LED-Einheit und nicht Ausschalten befinden können gegebenenfalls mit einem steuerbaren Widerstand beeinflusst werden. Bei der oben genannten Betriebsspannung U_{B} von 10 Volt kann eine LED-Einheit kurzgeschlossen werden, sodass sich im Beispiel nur noch eine benötigte Spannung von ca. 3 x 3 Volt = 9 Volt ergibt und die restliche Spannung von 1 Volt an einem in Serie liegenden Widerstand oder, wie im vorliegenden Beispiel, einer Stromquelle liegt.

Wesentlich ist nun, dass aufgrund der Gewichtung nicht einfach eine beliebige LED-Einheit kurzgeschlossen, sondern jene mit der niedrigsten Priorität, im vorliegenden bzw. oben genannten Beispiel wäre das jene LED-Einheit VF, welche das Vorfeld ausleuchten soll.

Wieder auf Fig. 2 zurückkommend soll erläutert werden, dass für den Fall der Notbeleuchtung diese Funktion nicht nur durch Kurzschließen einzelner LED-Einheiten realisiert werden kann, sondern auch eine prinzipielle Änderung ihrer Verschaltung. Für den Fall von vier LED-Einheiten könnte man beispielsweise zwei LED-Einheiten in Serie mit der Parallelschaltung von zwei weiteren LED-Einheiten schalten, wodurch die benötigte Spannung um ein Viertel reduziert wird, wobei sich für die parallelgeschalteten LED-Einheiten nur der halbe Strom und eine entsprechend reduzierte Lichtstärke ergeben.

Bei dem Beispiel der Fig. 2 mit sechs LED-Einheiten werden in einer bestimmten Notbeleuchtungssituation (insbesondere auf Grund einer zu geringen Betriebsspannung) in der Darstellung rechts die LED-Einheiten D1 und D4 mit vollem Strom und die LED-Einheiten D2, D3, D5 und D6 im Prinzip je mit dem halben Strom betrieben. Damit ergibt sich hier auch die Möglichkeit zu entscheiden, welche LED-Einheiten für die Sichtbarkeit gegenüber anderen Verkehrsteilnehmer wichtiger sein sollten und daher erst zu allerletzt in ihrer Lichtstärke verringert werden sollen. Demnach wären (wenn man im Beispiel der gezeigten Fig. 2, rechts bleibt) D1 und D4 höher priorisiert als D2, D3, D5 und D6.

Somit erkannt man, dass für die Notbeleuchtung die Klassifizierung der LED-Einheiten nach Ihrer Priorität erforderlich ist, um eine Einheit mit niedriger Priorität abzuschalten, d.h. kurzzuschließen. Zusätzlich kann noch ein auch periodisch durchlaufendes Kurzschließen der restlichen, nicht ständig kurzgeschlossenen LED-Einheiten erfolgen und ebenso von einer Änderung des Stromes Is durch die gesteuerte Stromquelle Gebrauch gemacht werden.

## Patentansprüche

1. Verfahren zum Speisen von n LED-Einheiten (LED1, .... LED5) zumindest einer Leuchteinheit eines Kraftfahrzeuges mittels einer gesteuerten Stromquelle (5) aus einer Spannungsquelle (2) mit schwankender Betriebsspannung (U_{B}), bei welchem je nach Höhe der Betriebsspannung einzelne LED-Einheiten in Serie und/oder parallel geschaltet und/oder überbrückt werden,
wobei das Verschalten der LED-Einheiten (LED1, .... LED5) bei einem Absinken der Betriebsspannung (U_{B}) unter Berücksichtigung einer abgespeicherten Gewichtung hinsichtlich der einzelnen LED-Einheiten zugeordneten Priorität erfolgt,
**dadurch gekennzeichnet, dass**
die LED-Einheiten einzelne Bereiche der Fahrbahn ausleuchten, wobei jener Bereich, der sich am nächsten dem HV-Punkt befindet, am höchsten priorisiert/gewichtet wird und/oder
die Gewichtung auf Basis zugeführter, die aktuelle Fahrsituation betreffender Signale, beispielsweise GPS-Signale, Lenkradsignale oder anderer Signale eines Bordrechners erfolgt.

2. Verfahren nach Anspruch 1, **dadurch gekennzeichnet, dass** eine Serienschaltung von n LED-Einheiten (LED1, .... LED5) gespeist wird, wobei je nach Höhe der Betriebsspannung einzelne LED-Einheiten kurzgeschlossen werden, und bei einem Absinken der Betriebsspannung (U_{B}) unter Berücksichtigung einer abgespeicherten Gewichtung hinsichtlich der Priorität je k LED-Einheiten (LED1... LED5) der Serienschaltung kurzgeschlossen werden, wobei gleichzeitig (n-k) LED-Einheiten stromdurchflossen bleiben.

3. Verfahren nach Anspruch 2, **dadurch gekennzeichnet, dass** bei nominaler Betriebsspannung (U_{B}) und normalen Betriebszustand k = 0 gewählt und die Serienschaltung mit konstantem Strom (I_{S}) gespeist wird.

4. Verfahren nach einem der Ansprüche 1 bis 3, **dadurch gekennzeichnet, dass** im Falle des Kurzschließens von LED-Einheiten (LED1, .... LED5) die Stromquelle (5) zur Änderung auf einen höheren/niedrigeren Wert des konstanten Stroms (I_{S}) angesteuert wird.

5. Verfahren nach Anspruch 4, **dadurch gekennzeichnet, dass** bei einem Absinken der Betriebsspannung (U_{B}) der Strom durch die Serienschaltung erhöht und/oder zumindest eine der restlichen, nicht ständig kurzgeschlossenen LED-Einheiten zyklisch durchlaufend ständig wechselnd kurzgeschlossen wird.

6. Verfahren nach Anspruch 4 oder 5, **dadurch gekennzeichnet, dass** die Stromerhöhung in Abhängigkeit von einer für die LED-Einheiten signifikanten Temperatur erfolgt.

7. Verfahren nach Anspruch 5, **dadurch gekennzeichnet, dass** die Dauer (τ) eines Taktes zwischen 1µs und 50 ms und vorzugsweise mit 5 ms gewählt wird.

8. Schaltungsanordnung zum Speisen von n LED-Einheiten (LED1, ...., LED5) zumindest einer Leuchteinheit eines Kraftfahrzeugs mittels einer gesteuerten Stromquelle (5) aus einer Spannungsquelle (2) mit schwankender Betriebsspannung (U_{B}), und mit einer Steuereinheit (3) zum Ansteuern der Stromquelle und einer den LED-Einheiten zugeordneten Schaltmatrix (4, 4') mit gesteuerten Schaltern (Sᵢ, S₁, ...., S₄), wobei die Steuereinheit dazu eingerichtet ist, je nach Höhe der Betriebsspannung einzelne LED-Einheiten in Serie und/oder parallel zu schalten und/oder zu überbrücken, wobei der Steuereinheit (3) eine Speichereinheit (7) zum Abspeichern von Informationen über Gewichtungen zur Priorität bestimmter LED-Einheiten zugeordnet ist und die Steuereinheit (3) zum Vergleich der Betriebsspannung (U_{B}) und/oder des Stromes (I_{S}) der Stromquelle mit vorgebbaren Schwellenwerten eingerichtet ist und dazu, in Abhängigkeit von diesem Vergleich und der Gewichtung die Schaltmatrix so anzusteuern, dass das Verschalten der LED-Einheiten (LED1, ...., LED5) bei einem Absinken der Betriebsspannung (U_{B}) unter Berücksichtigung einer abgespeicherten Gewichtung hinsichtlich der einzelnen LED-Einheiten zugeordneten Priorität erfolgt, **dadurch gekennzeichnet, dass** die Steuereinheit (3) dazu eingerichtet ist, eine Gewichtung auf Basis zugeführter, die aktuelle Fahrsituation betreffender Signale, beispielsweise GPS-Signale, Lenkradsignale oder anderer Signale eines Bordrechners, durchzuführen.

9. Schaltungsanordnung nach Anspruch 8, **dadurch gekennzeichnet, dass** die Schalteranordnung aus n, je die in Serie geschalteten LED-Einheiten (LED1, ...., LED4, LED5) überbrückenden gesteuerten Schaltern (S₁, ...., S₄) besteht, und die Steuereinheit (3) dazu eingerichtet ist, in Abhängigkeit von dem Vergleich und der Gewichtung je k LED-Einheiten der Serienschaltung über die zugeordneten Schalter kurzzuschließen, wobei gleichzeitig (n-k) LED-Einheiten stromdurchflossen bleiben.

10. Schaltungsanordnung nach Anspruch 8 oder 9, **dadurch gekennzeichnet, dass** die Steuereinheit dazu eingerichtet ist, in Abhängigkeit von dem Vergleich getaktet und zyklisch durchlaufend ständig wechselnd je k LED-Einheiten der Serienschaltung über die zugeordneten Schalter kurzzuschließen, wobei gleichzeitig (n-k) LED-Einheiten stromdurchflossen bleiben.

11. Schaltungsanordnung nach Anspruch 10, **dadurch gekennzeichnet, dass** die Dauer eines Taktes zwischen 1 µs und 50 ms liegt und vorzugsweise 5 ms beträgt.

12. Schaltungsanordnung nach einem der Ansprüche 8 bis 11, **dadurch gekennzeichnet, dass** die Speichereinheit (7) zum Abspeichern auch von Informationen über Maximalströme und jeweilige Istwerte von Spannungen und Strömen und Gewichtungen bestimmter LED-Einheiten zugeordnet ist.

13. Schaltungsanordnung nach einem der Ansprüche 8 bis 12, **dadurch gekennzeichnet, dass** die Steuereinheit (3) dazu eingerichtet ist, bei einem Absinken der Betriebsspannung (U_{B}) den Strom durch die Serienschaltung zu erhöhen und/oder zumindest eine der LED-Einheiten zyklisch durchlaufend ständig wechselnd kurzzuschließen.

## Claims

1. A method for powering n LED units (LED1, .... LED5) of at least one lamp unit of a motor vehicle by means of a controlled current source (5) from a voltage source (2) with fluctuating operating voltage (U_{B}), in which individual LED units are connected in series and/or in parallel and/or bridged, depending on the level of the operating voltage,
the interconnection of the LED units (LED1, ... LED5) taking place during a drop of the operating voltage (U_{B}), taking account of a stored weighting with regards to the priority assigned to the individual LED units,
**characterized in that**
the LED units illuminate individual regions of the carriageway, the region, which is closest to the HV point, being given highest priority/weighted highest, and/or
the weighting takes place on the basis of supplied signals relating to the current driving situation, for example GPS signals, steering-wheel signals or other signals of an on-board computer.

2. The method according to claim 1, **characterized in that** a series circuit is powered by n LED units (LED1, .... LED5), wherein, depending on the level of the operating voltage, individual LED units are short-circuited, and in the event of a drop of the operating voltage (U_{B}), whilst taking account of a stored weighting with regards to the priority, in each case k LED units (LED1, .... LED5) of the series circuit are short-circuited, wherein (n-k) LED units remain live at the same time.

3. The method according to claim 2, **characterized in that** for a nominal operating voltage (U_{B}) and normal operating state, k = 0 is chosen and the series circuit is powered with constant current (I_{S}).

4. The method according to one of claims 1 to 3, **characterized in that**, in the case of a short circuit of LED units (LED1, .... LED5), the current source (5) is controlled for changing to a higher/lower value of the constant current (I_{S}).

5. The method according to claim 4, **characterized in that** in the event of a drop in the operating voltage (U_{B}), the current through the series circuit is increased and/or at least one of the remaining LED units, which is not continuously short-circuited, is cyclically continuously alternately short-circuited.

6. The method according to claim 4 or 5, **characterized in that** the current increase takes place as a function of a temperature significant for the LED units.

7. The method according to claim 5, **characterized in that** the duration (τ) of a clock cycle is chosen to be between 1µs and 50 ms and preferably 5 ms.

8. A circuit arrangement for powering n LED units (LED1, ...., LED5) of at least one lamp unit of a motor vehicle by means of a controlled current source (5) from a voltage source (2) with fluctuating operating voltage (U_{B}), and having a control unit (3) for controlling the current source and a switching matrix (4, 4') assigned to the LED units, which has controlled switches (Sᵢ, S₁, ...., S₄), the control unit being set up, to connect, in series and/or in parallel, and/or to bridge individual LED units, depending on the level of the operating voltage, a memory unit (7) for storing information about weightings for priority of certain LED units being assigned to the control unit (3) and the control unit (3) being set up for comparing the operating voltage (U_{B}) and/or the current (I_{S}) of the current source with predeterminable threshold values and to control the switching matrix, as a function of this comparison and the weighting, in such a manner that the interconnection of the LED units (LED1, ... LED5) takes place in the event of a drop of the operating voltage (U_{B}), taking account of a stored weighting with regards to the priority assigned to the individual LED units, **characterized in that** the control unit (3) is set up to carry out a weighting on the basis of supplied signals relating to the current driving situation, for example GPS signals, driving-wheel signals or other signals of an on-board computer.

9. The circuit arrangement according to claim 8, **characterized in that** the switch arrangement consists of n controlled switches (S₁, ...., S₄) bridging the LED units (LED1, ...., LED4, LED5) connected in series in each case, and the control unit (3) is set up to short circuit in each case k LED units of the series circuit by means of the assigned switches as a function of the comparison and the weighting, wherein (n-k) LED units remain live at the same time.

10. The circuit arrangement according to claim 8 or 9, **characterized in that** the control unit is set up to short circuit in each case k LED units of the series circuit by means of the assigned switches, as a function of the comparison in a clocked and cyclically continuously alternate manner, wherein (n-k) LED units remain live at the same time.

11. The circuit arrangement according to claim 10, **characterized in that** the duration of a clock cycle lies between 1 µs and 50 ms and is preferably 5 ms.

12. The circuit arrangement according to one of claims 8 to 11, **characterized in that** the memory unit (7) is assigned for also storing information about maximum currents and respective actual values of voltages and currents and weightings of certain LED units.

13. The circuit arrangement according to one of claims 8 to 12, **characterized in that** the control unit (3) is set up, in the event of a drop in the operating voltage (U_{B}), to increase the current through the series circuit is increased and/or to cyclically continuously alternately short circuit at least one of the LED units.

## Revendications

1. Procédé d'alimentation de n unités à LED (LED1, ... LED5) d'au moins une unité d'éclairage d'un véhicule automobile au moyen d'une source de courant commandée (5) à partir d'une source de tension (2) ayant une tension de fonctionnement (U_{B}) variable, dans lequel des unités à LED individuelles sont connectées en série et/ou connectées en parallèle et/ou contournées en fonction du niveau de la tension de fonctionnement,
dans lequel les unités à LED (LED1, ... LED5) sont interconnectées lorsque la tension de fonctionnement (U_{B}) chute, en prenant en considération une pondération mise en mémoire en ce qui concerne la priorité attribuée aux unités à LED individuelles,
**caractérisé par le fait que**
les unités à LED éclairent des régions individuelles de la chaussée, la région qui se situe le plus près du point HV se voyant donner la priorité/pondération la plus haute et/ou
la pondération a lieu sur la base de signaux fournis concernant la situation de conduite courante, par exemple des signaux GPS, des signaux de volant ou autres signaux d'un ordinateur embarqué.

2. Procédé selon la revendication 1, **caractérisé par le fait qu'**une connexion en série de n unités à LED (LED1, ... LED5) est alimentée, des unités à LED individuelles étant court-circuitées en fonction du niveau de la tension de fonctionnement, et, lorsque la tension de fonctionnement (U_{B}) chute, en prenant en considération une pondération mise en mémoire en ce qui concerne la priorité, k unités à LED (LED1 ... LED5) de la connexion en série sont court-circuitées, où simultanément un courant continue à circuler à travers (n-k) unités à LED.

3. Procédé selon la revendication 2, **caractérisé par le fait que** k=0 est choisi à une tension de fonctionnement nominale (U_{B}) et un état de fonctionnement normal et la connexion en série est alimentée par un courant constant (I_{S}).

4. Procédé selon l'une des revendications 1 à 3, **caractérisé par le fait que** la source de courant (5) est activée pour le changement à une valeur supérieure/inférieure du courant constant (I_{S}) si des unités à LED (LED1, ... LED5) sont court-circuitées.

5. Procédé selon la revendication 4, **caractérisé par le fait que** le courant à travers la connexion en série est augmenté et/ou au moins l'une des unités à LED restantes qui ne sont pas court-circuitées de façon permanente, est court-circuité d'une manière à roulement cyclique, alternant en continu, lorsque le courant de fonctionnement (U_{B}) chute.

6. Procédé selon l'une des revendications 4 ou 5, **caractérisé par le fait que** l'augmentation de courant a lieu en fonction d'une température significative pour les unités à LED.

7. Procédé selon la revendication 5, **caractérisé par le fait que** la durée (τ) d'une impulsion d'horloge est choisie entre 1 µs et 50 ms et, de préférence, est de 5 ms.

8. Agencement de circuit pour l'alimentation de n unités à LED (LED1, ...., LED5) d'au moins une unité d'éclairage d'un véhicule automobile au moyen d'une source de courant commandée (5) à partir d'une source de tension (2) ayant une tension de fonctionnement (U_{B}) variable, et ayant une unité de commande (3) pour l'activation de la source de courant et une matrice de commutation (4, 4') attribuée aux unités à LED, ayant des commutateurs commandés (Sᵢ, S₁, ..., S₄), dans lequel l'unité de commande est conçue pour connecter des unités à LED individuelles en série et/ou en parallèle et/ou pour les contourner en fonction du niveau de la tension de fonctionnement, dans lequel une unité de mise en mémoire (7) pour la mémorisation d'informations à propos de pondérations sur la priorité d'unités à LED déterminées est attribuée à l'unité de commande (3) et l'unité de commande (3) est configurée pour la comparaison de la tension de fonctionnement (U_{B}) et/ou du courant (I_{S}) de la source de courant à des valeurs de seuil prédéfinissables et pour activer la matrice de commutation en fonction de cette comparaison et de la pondération de telle sorte que les unités à LED (LED1, ..., LED5) sont interconnectées lorsque la tension de fonctionnement (U_{B}) chute, en prenant en considération une pondération mise en mémoire en ce qui concerne la priorité associée aux unités à LED individuelles, **caractérisé par le fait que** l'unité de commande (3) est conçue pour réaliser une pondération sur la base de signaux fournis concernant la situation de conduite courante, par exemple des signaux GPS, des signaux de volant et autres signaux d'un ordinateur embarqué.

9. Agencement de circuit selon la revendication 8, **caractérisé par le fait que** l'agencement de circuit est composé de n commutateurs commandés (S₁, ... S₄) qui chacun contournent les unités à LED connectées en série (LED1, ..., LED4, LED5), et l'unité de commande (3) est configurée pour court-circuiter k unités à LED de la connexion en série par l'intermédiaire des commutateurs attribués, en fonction de la comparaison et de la pondération, où simultanément un courant continue à circuler à travers (n-k) unités à LED.

10. Agencement de circuit selon l'une des revendications 8 ou 9, **caractérisé par le fait que** l'unité de commande est configurée pour court-circuiter k unités à LED de la connexion en série par l'intermédiaire des commutateurs attribués, d'une manière cadencée et à roulement cyclique, alternant en continu, en fonction de la comparaison, où simultanément un courant continue à circuler à travers (n-k) unités à LED.

11. Agencement de circuit selon la revendication 10, **caractérisé par le fait que** la durée d'une impulsion d'horloge est entre 1 µs et 50 ms, et de préférence est de 5 ms.

12. Agencement de circuit selon l'une des revendications 8 à 11, **caractérisé par le fait que** l'unité de mise en mémoire (7) est attribuée à la mémorisation également d'informations à propos de courants maximaux et de valeurs réelles respectives de tensions et de courants et de pondérations d'unités à LED déterminées.

13. Agencement de circuit selon l'une des revendications 8 à 12, **caractérisé par le fait que** l'unité de commande (3) est configurée pour augmenter le courant à travers la connexion en série et/ou pour court-circuiter au moins l'une des unités à LED d'une manière à roulement cyclique, alternant en continu, lorsque le courant de fonctionnement (U_{B}) chute.
